# EUROPEAN PATENT APPLICATION

(11) **EP 0 648 631 A1**
(43) Date of publication of application: **19.04.1995**
(21) Application number: 94307218.1
(22) Date of filing: 03.10.1994
(51) Int. Cl.: B60J 10/12

(54) **Vehicle opening roof**

(30) Priority: 19.10.1993 GB 9321488
(71) Applicant: Britax Weathershields Limited, Birmingham B5 7EH (GB)
(72) Inventor: Miller, Andrew Howard John, Stoke, Coventry CV2 5HR (GB)
(74) Representative: Hollinghurst, Antony

(57) **Abstract**

The interior of a motor vehicle roof (46) is lined with roof trim (48). A frame (16) for an opening roof panel (12) is mounted in an opening in the vehicle roof (46) with a portion (20) extending round the vehicle opening below the vehicle roof (46). A clamping ring (28) is secured to said portion (20) of the frame (16) and has a vertical limb (30) abutting against the underside of the vehicle roof (46) adjacent to the roof opening. A trim flap (44) is formed integrally with the clamping ring (28) and extends between the clamping ring (28) and the lower surface of the roof trim (48) surrounding the opening. To provide sufficient flexibility to cater for roof trim (48) of differing thickness, the trim flap (44) is formed of a softer material than the rest of the clamping ring (28).

## Description

This invention relates to a motor vehicle having an opening roof, the interior of the vehicle roof being lined with roof trim and the opening roof comprising a frame mounted in an opening in the vehicle roof with a portion thereof extending round the vehicle opening below the vehicle roof, movable closure means mounted in the frame, a clamping ring secured to said portion of the frame and having a vertical limb abutting against the underside of the vehicle roof adjacent to the roof opening, and a trim flap extending between the clamping ring and the lower surface of the roof trim surrounding the opening.

An opening roof of this type is disclosed in GB-A-2193930 wherein the trim flap forms part of a trim member which is clipped onto the clamping ring.

According to the invention, in a vehicle having a opening roof of the type described above, the trim flap is formed integrally with the clamping ring, the trim flap being formed of a softer material than the rest of the clamping ring.

In one form of the invention, the trim flap and the rest of the clamping ring are injection-moulded sequentially.

An embodiment of the invention will now be described, by way of example, with reference to the accompanying drawings, in which:
Figure 1 is a perspective view of the type of a motor car having an opening roof in accordance with the invention, with the panel in its open position;
Figure 2 is a cross-sectional view taken on the line 2-2 in Figure 1, but with the panel in its closed position; and
Figure 3 is a cross-sectional view similar to Figure 2, but showing the invention used with a vehicle having thinner interior roof trim than that shown in Figure 2.

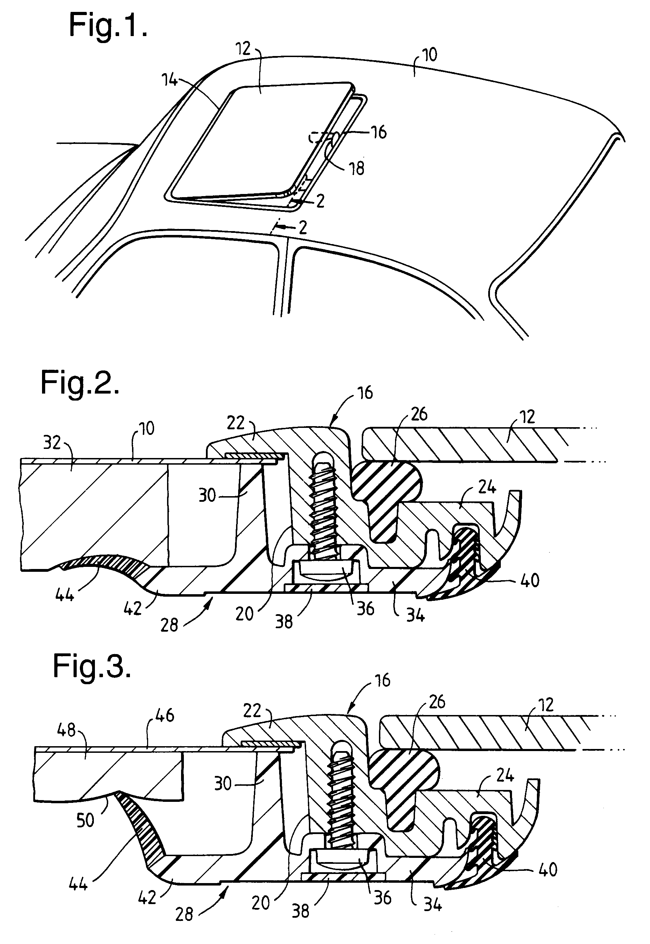

Referring to Figures 1 and 2, a roof 10 of a motor vehicle has a opening which is filled by a panel 12 hinged along its leading edge 14 to a frame 16 which bounds the opening. An opening mechanism 18 at the rear of the panel is arranged to hold the panel 12 in a fully open position as illustrated in Figure 1 or in a fully closed position in which the panel 12 is level with the vehicle roof, as illustrated in Figure 2.

As can be seen from Figure 2, the frame 16 has a vertical portion 20 which projects through the opening in the vehicle roof 10, an upper flange 22 which overlies the edge of the vehicle roof 10, and a lower flange 24 which projects inwardly with respect to with the panel 12 and carries a seal 26 for engagement therewith.

A clamping ring 28, of inverted T-shaped cross-section has its stem 30 engaging with the under side of the vehicle roof 10 in a region from which the trim 32 has been removed. One side limb 34 is secured to the lower side of the flange 24 by screws 36 which engage in holes in the vertical portion 20 of the frame 16, the screw heads being covered by trim caps 38. A trim member 40 is received in a gap between the edge of the limb 34 and the adjacent part of the flange 24.

The other limb 42 of the T-shaped clamping ring 28 extends over the edge of the roof trim 32. The stem 30 and the side limbs 34 and 42 of the clamping ring 28 are moulded from a relatively hard material such as a glass-fibre-reinforced polyamide. A flap 44 of softer material is moulded onto the free end of the limb 42 so as to project upwardly at an acute angle to the stem 30. The flap 44 is formed of a synthetic elastomeric material such as S-EB-S (2 polystyrene end blocks with ethylene-butylene middle blocks) or PP/EPDM (polypropylene/ethylene propylene diene polymethylene). As shown in Figure 2, the relatively thick trim 32 forces the flap 44 into a substantially horizontal orientation.

Referring to Figure 3, when the frame 16 and trim ring 28 are fitted to a vehicle roof 46 having thinner inner trim material 48, the flap is distorted to a lesser extent but still has sufficient resilience to force an indentation 50 into the bottom surface of the trim material 48.

## Claims

1. A motor vehicle having an opening roof, the interior of the vehicle roof (46) being lined with roof trim (32, 48) and the opening roof comprising a frame (16) mounted in an opening in the vehicle roof (46) with a portion (20) thereof extending round the vehicle opening below the vehicle roof (46), movable closure means (12) mounted in the frame (16), a clamping ring (28) secured to said portion (20) of the frame (16) and having a vertical limb (30) abutting against the underside of the vehicle roof (46) adjacent to the roof opening, and a trim flap (44) extending between the clamping ring (28) and the lower surface of the roof trim (32, 48) surrounding the opening, characterised in that the trim flap (44) is formed integrally with the clamping ring (28), the trim flap (44) being formed of a softer material than the rest of the clamping ring (28).

2. A motor vehicle having an opening roof according to claim 1, wherein the trim flap (44) and the rest of the clamping ring (28) are injection-moulded sequentially.
